(19) Europäisches Patentamt
European Patent Office
Office européen des brevets

(11) **EP 4 012 441 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **20213336.9**

(22) Anmeldetag: **11.12.2020**

(51) Internationale Patentklassifikation (IPC):
*G01S 7/481* (2006.01)     *G01S 7/4865* (2020.01)
*G01S 7/497* (2006.01)     *G01S 17/10* (2020.01)
*G01S 17/894* (2020.01)    *G01S 17/42* (2006.01)

(52) Gemeinsame Patentklassifikation (CPC):
**G01S 17/10; G01S 7/4811; G01S 7/4815; G01S 7/4817; G01S 7/4865; G01S 7/4972; G01S 17/42**

(54) **VORRICHTUNG ZUR LASERVERMESSUNG EINER UMGEBUNG**

DEVICE FOR LASER MEASURING AN ENVIRONMENT

DISPOSITIF DE MESURE LASER D'UN ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.06.2022   Patentblatt 2022/24**

(73) Patentinhaber: **RIEGL Laser Measurement Systems GmbH**
**3580 Horn (AT)**

(72) Erfinder:
 • **ULLRICH, Andreas**
  **3003 Gablitz (AT)**
 • **RIEGER, Peter**
  **3824 Grossau (AT)**
 • **REICHERT, Rainer**
  **3580 Horn (AT)**

(74) Vertreter: **Weiser & Voith**
**Patentanwälte Partnerschaft**
**Kopfgasse 7**
**1130 Wien (AT)**

(56) Entgegenhaltungen:
**EP-A1- 3 425 332     EP-B1- 3 182 159**
**AT-B1- 509 180     US-A1- 2020 225 328**

## Beschreibung

Die vorliegende Erfindung betrifft eine Vorrichtung zur Vermessung einer Umgebung durch Laufzeitmessung von daran reflektierten Laserstrahlen, insbesondere gepulsten Laserstrahlen, umfassend eine Strahlablenkeinrichtung mit zumindest einer Spiegelfläche, die um eine zur Spiegelfläche nicht-normale Drehachse dreh- oder schwingbar ist, welche Strahlablenkeinrichtung ein Spiegelprisma aufweist, dessen Prismenmantelseiten jeweils eine Spiegelfläche bilden und dessen Prismenachse die Drehachse ist, einen ersten Lasersender, der zum Aussenden eines ersten Sende-Laserstrahls in einer ersten zeitabhängigen Senderichtung über die Strahlablenkeinrichtung ausgebildet ist, und einen ersten Laserempfänger, der zum Empfangen des von der Umgebung reflektierten und über die Strahlablenkeinrichtung in einer ersten zeitabhängigen Empfangsrichtung zurückerhaltenen ersten Sende-Laserstrahls als ersten Empfangs-Laserstrahl ausgebildet ist, wobei die ersten Sende- und Empfangsrichtungen zu den jeweiligen Sende- und Empfangszeiten der Sende- und Empfangs-Laserstrahlen zueinander parallel und in einem ersten Winkel zur Drehachse liegen.

Vorrichtungen dieser Art sind beispielsweise aus der EP 3 182 159 B1 bekannt und werden insbesondere bei der luftgestützten Vermessung von Landschaften verwendet. Aus der AT 509180 B1 und der US 2020/0225328 A1 bzw. aus der EP 3 425 332 A1 sind jeweils Vorrichtungen bekannt, die ähnlich verwendbar sind, jedoch einen Spiegelpyramidenstumpf bzw. ein oder mehrere rotierende transparente Prismen als Strahlablenkeinrichtung aufweisen.

Bei der luftgestützten Vermessung von Landschaften wird von einem Laserscanner an Bord eines Flugzeugs aus großer Flughöhe eine Vielzahl von Laserimpulsen mittels der Strahlablenkeinrichtung auf viele Zielpunkte am Boden ausgesandt, und aus Laufzeitmessungen der Zielreflexionen werden die Zielentfernungen und daraus - in Kenntnis der Position und Lage des Laserscanners und des jeweiligen Ablenkwinkels - ein Punktemodell ("3D-Punktwolke") der Landschaft erstellt. Dabei wird der auf die sich drehende(n) oder schwingende(n) Spiegelfläche(n) (bzw. im Fall der EP 3 425 332 A1: auf die rotierenden Prismen) gerichtete Sende-Laserstrahl von dieser bzw. diesen periodisch über einen Abtastwinkelbereich verschwenkt ("gescannt") und bildet einen Scanfächer (bzw. einen Scankegel) zum Überstreichen der Landschaft. Der umgebungsreflektierte Empfangs-Laserstrahl wird dabei auf demselben Wege zurückempfangen, d.h. die jeweils zum Aussenden eines Sende-Laserimpulses in einer bestimmten Richtung verwendete Spiegelfläche (bzw. das jeweils zum Aussenden eines Sende-Laserimpulses in einer bestimmten Richtung verwendete Prisma) wird gleichzeitig zum Umlenken des aus derselben Richtung empfangenen Laserimpulses auf den Laserempfänger verwendet.

Derartige Laserscanner haben unterschiedlichste Anforderungen zu erfüllen. Einerseits ist eine möglichst rasche und vollständige Erstellung der Punktwolke während des Vermessungsflugs wünschenswert, anderseits soll die Vermessung dabei gleichzeitig möglichst fehlerfrei sein. Staub, Luftfeuchtigkeit oder Wolken im Nahbereich können Störreflexionen verursachen, welche die Erstellung des Landschaftsmodells erschweren oder dieses verfälschen. Die Erfindung setzt sich zum Ziel, eine Vorrichtung zum Laserscannen zu schaffen, welche eine besonders rasche, aussagekräftige und von Nahzielfehlern freie Erstellung einer Punktwolke der Umgebung ermöglicht.

Diese Ziel wird mit einer Vorrichtung der einleitend genannten Art erreicht, welche sich erfindungsgemäß durch einen zweiten Lasersender, der zum Aussenden eines zweiten Sende-Laserstrahls in einer zweiten zeitabhängigen Senderichtung über die Strahlablenkeinrichtung ausgebildet ist, und einen zweiten Laserempfänger auszeichnet, der zum Empfangen des von der Umgebung reflektierten und über die Strahlablenkeinrichtung in einer zweiten zeitabhängigen Empfangsrichtung zurückerhaltenen zweiten Sende-Laserstrahls als zweiten Empfangs-Laserstrahl ausgebildet ist, wobei die zweiten Sende- und Empfangsrichtungen zu den jeweiligen Sende- und Empfangszeiten der Sende- und Empfangs-Laserstrahlen zueinander parallel und in einem zweiten Winkel zur Drehachse liegen, und wobei der erste Laserempfänger vom ersten Lasersender und der zweite Laserempfänger vom zweiten Lasersender jeweils in Richtung der Drehachse beabstandet ist.

Die Laserscanvorrichtung der Erfindung kann mit einer einzigen Strahlablenkeinrichtung gleichzeitig zwei oder mehr (siehe dazu weiter unten) voneinander divergierende Scanfächer aussenden. Zum einen können dadurch in derselben Zeit doppelt so viele Messpunkte der Umgebung für die Punktwolke erstellt werden. Zum anderen wird ein und dieselbe Stelle der Umgebung, wenn die Vorrichtung in einer von den Scanfächerebenen abweichenden Vorschubrichtung über die Umgebung bewegt wird, von den Scanfächern jeweils unter unterschiedlichen Winkeln getroffen, sodass auch Flächen, die zufällig in der Ebene eines Scanfächers liegen, von einem anderen Scanfächer richtig erfasst werden können. Wenn beispielsweise bei der luftgestützten Vermessung der eine Scanfächer in Nadir-Richtung und der andere Scanfächer schräg nach vorne oder hinten gerichtet ist, können so auch vertikale Häuserfassaden korrekt in der Punktwolke abgebildet werden. Gleichzeitig ist die Vermessung störungsunanfällig gegenüber "falschen" Umgebungszielen im Nahbereich, wie Fahrgestellteilen eines Flugzeugs, Wolken usw., und zwar wegen der Parallaxe durch die gegenseitige Beabstandung der Lasersender und -empfänger in Drehachsenrichtung. Durch diese Parallaxe kann die Vorrichtung erst Ziele ab einer bestimmten Mindestdistanz erfassen, welche von der Strahlaufweitung des Sende-Laserstrahls, der Empfangsapertur des Laserempfängers und dem genannten Abstand zwischen Sender und Empfänger abhängt.

Im Ergebnis erzielt die Vorrichtung der Erfindung mit einfachen Mitteln, nämlich einer einzigen, in Drehachsenrichtung ausgedehnten Strahlablenkeinrichtung, entlang deren die Lasersender und -empfänger verteilt sind, eine besonders rasche, vollständige und störungsunanfällige Vermessung der Umgebung.

Bevorzugt sind die Lasersender so auf die Strahlablenkeinrichtung gerichtet, dass die Sende-Laserstrahlen einander im wesentlichen an der Strahlablenkeinrichtung kreuzen. Unter "im wesentlichen an der Strahlablenkeinrichtung" wird der unmittelbare Nahbereich der Strahlablenkeinrichtung verstanden, und zwar in Relation zu der durchschnittlichen Messentfernung der Umgebung. Beispielsweise wird die Umgebung beim luftgestützten Laserscanner aus einer Flughöhe von mehreren 100 Metern oder Kilometern vermessen, und ein im Vergleich dazu vernachlässigbarer Nahbereich kann bis zu einige Meter betragen.

Indem sich die Sende-Laserstrahlen möglichst nahe der Strahlablenkeinrichtung kreuzen, liegen die Auftreffpunkte der Sende-Laserstrahlen auf der bzw. den Spiegelfläche(n) der Strahlablenkeinrichtung in Drehachsenrichtung gesehen möglichst nahe beieinander, sodass die Länge der Strahlablenkeinrichtung in Drehachsenrichtung reduziert werden kann.

Gemäß einem weiteren bevorzugten Merkmal der Erfindung werden die Winkelausrichtungen der Lasersender und -empfänger und insbesondere auch die Abstände der Laserempfänger zur Strahlablenkeinrichtung so gewählt, dass die EmpfangsLaserstrahlen zwischen der Strahlablenkeinrichtung und den Laserempfängern einander kreuzen. In gleicher Weise wird dadurch der für die Empfangs-Laserstrahlen notwendige Auftreffbereich auf der Strahlablenkeinrichtung in deren Drehachsenrichtung minimiert. Überdies kann dadurch im Kreuzungsbereich der Empfangs-Laserstrahlen eine gemeinsame Fokussieroptik angeordnet werden, so dass nur eine einzige Fokussieroptik für alle Empfangs-Laserstrahlen erforderlich ist und ihre Größe auf den Kreuzungsbereich reduziert werden kann.

In einer ersten bevorzugten Ausgestaltung der Erfindung liegen die ersten und zweiten Sende- und Empfangsrichtungen zu den jeweiligen Sende- und Empfangszeiten der Sende- und Empfangs-Laserstrahlen in einer gemeinsamen, zur Drehachse parallelen Ebene. Wenn die Vorrichtung mit ihrer Drehachse in Vorschubrichtung einer Transportplattform, z.B. eines Luftfahrzeugs, montiert ist, überlappen sich dadurch die Scanfächer in Vorschubrichtung, sodass ein und dieselben Stellen der Umgebung von Scanfächern unter unterschiedlichen Winkeln gescannt werden können.

In einer zweiten bevorzugten Ausführungsform der Erfindung sind die Lasersender und Laserempfänger so ausgerichtet, dass zwischen Strahlablenkeinrichtung und Umgebung jene Sende- und Empfangs-Laserstrahlen, die von der Strahlablenkeinrichtung weg gesehen sich einander nähern, zueinander windschief sind. Dies erhöht die Nahbereichsunempfindlichkeit und damit Störungsunanfälligkeit der Vorrichtung. Ohne diese Maßnahme könnte es passieren, dass der Sende-Laserstrahl eines Lasersenders von einem Nahziel, z.B. einer Wolke, in die Empfangsrichtung eines einem anderen Lasersender zugeordneten Laserempfängers reflektiert wird und so zu fehlerhaften Punkten in der Punktwolke führt.

In einer ersten besonders bevorzugten Variante hat das Spiegelprisma eine über seinen Umfang umlaufende Nut, wobei in Richtung der Prismenachse gesehen die Lasersender zur einen Seite und die Laserempfänger zur anderen Seite der Nut liegen. In einer zweiten bevorzugten Variante trägt das Spiegelprisma eine über seinen Umfang umlaufende Rippe, wobei in Richtung der Prismenachse gesehen die Lasersender zur einen Seite und die Laserempfänger zur anderen Seite der Rippe liegen. Dadurch kann die Trennschärfe der Nahbereichsunempfindlichkeit der Vorrichtung signifikant gesteigert werden. Eine störende Einstreuung der Sende-Laserstrahlen in die Empfangs-Laserstrahlen im Nahbereich der Vorrichtung wird durch diese Nut bzw. Rippe zusätzlich blockiert.

Bei beiden Varianten liegen in Richtung der Prismenachse gesehen die Laserempfänger bevorzugt in einem größeren Abstand zur Nut bzw. Rippe als die Lasersender. Mit anderen Worten wird ein Großteil der Längserstreckung des Spiegelprismas für den Auftreffbereich der Empfangs-Laserstrahlen zur Verfügung gestellt, sodass eine große Empfangsapertur verwendet werden kann und damit die Vorrichtung eine hohe Messempfindlichkeit und damit hohe Messreichweite hat. Gleichzeitig wird der für die Sende-Laserstrahlen verwendete Längsabschnitt des Spiegelprismas minimiert, sodass das Spiegelprisma eine reduzierte Länge hat.

Die erfindungsgemäße Vorrichtung kann mit den genannten Prinzipien auf beliebig viele Lasersender und -empfänger erweitert werden, z.B. drei, vier, fünf usw., die jeweils unter unterschiedlichen Winkeln auf die Strahlablenkeinrichtung gerichtet sind. Demgemäß zeichnet sich eine weitere bevorzugte Ausführungsform der Erfindung durch einen dritten Lasersender, der zum Aussenden eines dritten Sende-Laserstrahls in einer dritten zeitabhängigen Senderichtung über die Strahlablenkeinrichtung ausgebildet ist, und einen dritten Laserempfänger aus, der zum Empfangen des von der Umgebung reflektierten und über die Strahlablenkeinrichtung in einer dritten zeitabhängigen Empfangsrichtung zurückerhaltenen dritten Sende-Laserstrahls als dritten Empfangs-Laserstrahl ausgebildet ist, wobei die dritten Sende- und Empfangsrichtungen zu den jeweiligen Sende- und Empfangszeiten der Sende- und Empfangs-Laserstrahlen zueinander parallel und in einem dritten Winkel zur Drehachse liegen, und wobei der dritte Laserempfänger vom dritten Lasersender in Richtung der Drehachse beabstandet ist.

Zum Erfassen von vertikalen Flächen bzw. Fassaden in einem überflogenen Gelände ist es besonders günstig, wenn die ersten Sende- und Empfangsrichtungen mit den zweiten Sende- und Empfangsrichtungen sowie die zweiten Sende- und Empfangsrichtungen mit den dritten Sende- und Empfangsrichtungen jeweils zu den jeweiligen Sende- und Empfangszeiten der Sende- und EmpfangsLaserstrahlen einen Winkel im Bereich von 1° bis 30°, bevorzugt 5° bis 15°, besonders bevorzugt 5° bis 10°, bilden.

Wenn ferner bevorzugt vorgesehen wird, dass alle Spiegelflächen parallel zur Drehachse und die zweiten Sende- und Empfangsrichtungen normal zur Drehachse liegen, ergibt sich - bei einer scanfächerebenenfremden Horizontalbewegung der Vorrichtung relativ zur Umgebung - ein erster Scanfächer in Nadir-Richtung, ein zweiter Scanfächer in einer schrägen Vorwärtsrichtung und ein dritter Scanfächer in einer schrägen Rückwärtsrichtung. Damit können Punktwolken von überflogenen Gebäuden mit vertikalen Flächen besonders gut erstellt werden.

In jeder der genannten Ausführungsformen ist es besonders vorteilhaft, wenn die Strahlablenkeinrichtung im Strahlengang der Empfangs-Laserstrahlen zu den Laserempfängern zumindest einen Kompensationsspiegel aufweist, der um eine zur Drehachse parallele Stellachse verstellbar ist. Mit einem solchen Kompensationsspiegel können der Zeit- und damit Richtungsversatz der Spiegelfläche(n) der Strahlablenkeinrichtung ausgeglichen werden, der zwischen dem Aussenden eines Laserimpulses von der Strahlablenkeinrichtung bis zu dessen Rückempfang an der Strahlablenkeinrichtung vergeht. In dieser Zeit hat sich nämlich die entsprechende Spiegelfläche bereits ein Stück weiter gedreht, und damit würde sie für den Empfangs-Laserstrahl in eine andere Richtung "blicken" als sie für den Sende-Laserstrahl "gesendet" hat. Dieser Richtungsversatz ist von der Messentfernung und der Winkelgeschwindigkeit der Spiegelfläche abhängig und kann durch den Kompensationsspiegel entsprechend kompensiert werden. Die Sende- und Empfangsrichtungen der jeweils einander zugehörigen Lasersender und -empfänger können damit unabhängig von der Winkelgeschwindigkeit und der Messentfernung konstant zueinander parallelgehalten werden, was den Aufbau wesentlich vereinfacht. Es versteht sich jedoch, dass anstelle eines Kompensationsspiegels auch die Laserempfänger gegenüber den Lasersendern oder diesen zugeordnete Teile der Sendeablenkeinrichtung gegeneinander geringfügig winkelverstellt werden könnten, was hier unter dem Begriff "im Wesentlichen parallele Sende- und Empfangsrichtungen der Lasersender und -empfänger" subsumiert wird.

Besonders günstig ist es, wenn ein gemeinsamer Kompensationsspiegel für alle Empfangs-Laserstrahlen vorgesehen ist. Da der genannte Richtungsversatz für alle Empfangs-Laserstrahlen gleich ist, kann ein solcher einziger Kompensationsspiegel verwendet und damit der Aufbau der Vorrichtung vereinfacht werden.

Wie erörtert besteht eine bevorzugte Anwendungsform der Vorrichtung der Erfindung darin, dass sie auf einem Luftfahrzeug, das für eine Hauptflugrichtung ausgebildet ist, mit ihrer Drehachse nicht-normal zur Hauptflugrichtung montiert ist, bevorzugt im wesentlich parallel zur Hauptflugrichtung.

Die Erfindung wird nachstehend anhand von in den beigeschlossenen Zeichnungen dargestellten Ausführungsbeispielen näher erläutert. In den Zeichnungen zeigen:

Fig. 1 die Vorrichtung der Erfindung montiert auf einem Luftfahrzeug zum Vermessen einer Landschaft;
Fig. 2 einen der Sende- und Empfangskanäle der Vorrichtung von Fig. 1 in einem Blockschaltbild mit schematisch eingezeichneten Strahlverläufen;
die Fig. 3 und 4 die Vorrichtung von Fig. 1 ohne Gehäuse einmal in einer Stirnansicht in Richtung der Drehachse gesehen (Fig. 3) und einmal in einer Seitenansicht (Fig. 4), jeweils mit schematisch eingezeichneten Strahlverläufen; und
Fig. 5 die Parallaxe der Lasersender und -empfänger in einem Sende/Empfangs-Kanal der Vorrichtung von Fig. 1 in einer Seitenansicht wie in Fig. 4 mit schematisch eingezeichneten Strahlverläufen.

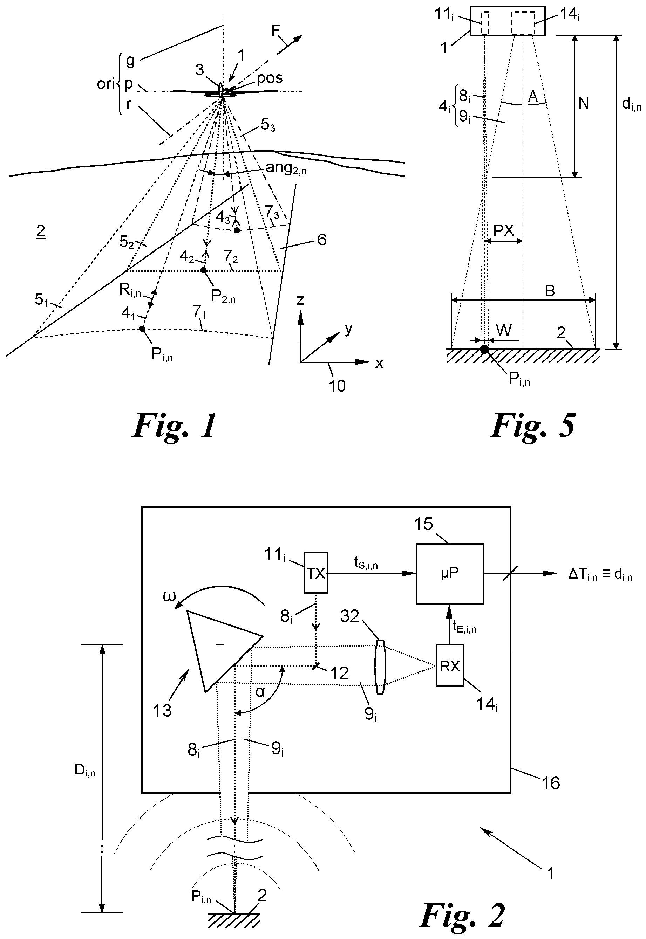

In Fig. 1 ist eine Vorrichtung 1 zum Vermessen einer Umgebung 2 von einem Fahrzeug 3 aus gezeigt. Die zu vermessende Umgebung 2 kann beispielsweise eine Landschaft (Terrain) sein, aber auch der Straßenboden und die Fassaden entlang eines Stra-ßenzugs, die Innenoberfläche einer Halle, eines Tunnels oder Bergwerks, oder die Meeresoberfläche oder der Meeresboden, usw. Bei dem Fahrzeug 3 kann es sich um ein Land-, Luft- oder Wasserfahrzeug handeln, bemannt oder unbemannt.

Die Vorrichtung 1 tastet mittels zweier oder mehrerer (hier: dreier) Lasermessstrahlen $4_1$, $4_2$, $4_3$, allgemein $4_i$ (i = 1, 2, ...), die Umgebung 2 zwecks deren Vermessung ab. Jeder Lasermessstrahl $4_i$ wird dazu zur Bildung eines jeweiligen Scanfächers $5_i$ hin und her geschwenkt und in Fortbewegungsrichtung F des Fahrzeugs 3 vorwärtsbewegt, um die Umgebung 2 in nebeneinanderliegenden Scanstreifen 6 (nur einer gezeigt) abzutasten. Wenn das Fahrzeug 3 ein Flugzeug ist, ist die Fortbewegungsrichtung F die Hauptflugrichtung des Flugzeugs, für die es gebaut ist.

Die Fortbewegungsrichtung F liegt dazu nicht in den Ebenen der Scanfächer $5_i$. Im gezeigten Fall ist die Fortbewegungsrichtung F normal zur Ebene des Scanfächers $5_2$, sodass der Scanfächer $5_2$ in Nadir-Richtung des Fahrzeugs 3 liegt und der Scanfächer $5_3$ schräg vorwärts und der Scanfächer $5_1$ schräg rückwärts nach unten auf die Umgebung 2 gerichtet ist. Die Scanfächer $5_i$ können aber auch z.B. um eine Hochachse g des Fahrzeugs 3 verdreht sein, sodass ihre Schnittlinien $7_i$ mit der Umgebung 2, die "Scanzeilen", im Scanstreifen 6 schräg zur projizierten Fortbewegungsrichtung F liegen. In gleicher Weise können die Scanfächer um eine Nickachse p und/oder Rollachse r des Fahrzeugs 3 verdreht sein.

Die Scanfächer $5_i$ sind nicht notwendigerweise eben. Beispielsweise liegen die Rückwärts- und Vorwärts-Scanfächer $5_1$, $5_3$ aufgrund des später erörterten Ablenkmechanismus der Lasermessstrahlen $4_i$ auf schwach gekrümm-

ten Kegelmantelflächen, siehe die beispielhaften Krümmungen der Scanzeile $7_1$, $7_3$. Dies ist für die Zwecke der vorliegenden Erfindung vernachlässigbar; unter dem Begriff "ebene" Scanfächer $5_i$ bzw. "Scanfächerebenen" der Scanfächer $5_i$ werden in der vorliegenden Beschreibung auch solche schwach gekrümmten Scanfächer verstanden.

Jeder Lasermessstrahl $4_i$ umfasst einen Sende-Laserstrahl $8_i$ von der Vorrichtung 1 zur Umgebung 2 und einen von dieser zurück zur Vorrichtung 1 reflektierten Empfangs-Laserstrahl $9_i$. Aus Laufzeitmessungen an Laserimpulsen $S_{i,n}$ (n = 1, 2, ...), die in dem jeweiligen Sende-Laserstrahl $8_i$ enthalten sind und jeweils an einem Punkt $P_{i,n}$ der Umgebung 2 reflektiert und als umgebungsreflektierte Laserimpulse $E_{i,n}$ in den Empfangs-Laserstrahlen $9_i$ in der Vorrichtung 1 zurückerhalten werden, können Entfernungsmesswerte $d_{i,n}$ von der jeweils aktuellen Position $pos_{i,n}$ der Vorrichtung 1 zum jeweiligen Abtastpunkt $P_{i,n}$ der Umgebung 2 berechnet werden anhand der bekannten Beziehung

$$d_{i,n} = c \cdot \Delta TP_{i,n}/2 = c \cdot (t_{E,i,n} - t_{S,i,n})/2 \qquad (1)$$

mit

$t_{S,i,n}$ Sendezeitpunkt des Sende-Laserimpulses $S_{i,n}$ des Sende-Laserstrahls $8_i$,

$t_{E,i,n}$ Empfangszeitpunkt des Empfangs-Laserimpulses $E_{i,n}$ des Empfangs-Laserstrahls $9_i$, und

c Lichtgeschwindigkeit.

In Kenntnis der jeweiligen Position $pos_{i,n}$ der Vorrichtung 1 bei Aussendung des Laserimpulses $S_{i,n}$ in einem lokalen oder globalen x/y/z-Koordinatensystem 10 der Umgebung 2, der jeweiligen Orientierung $ori_{i,n}$ der Vorrichtung 1 im Koordinatensystem 10, angegeben z.B. durch die Kipp-, Roll- und Gierwinkel des Fahrzeugs 3 um seine Quer-, Längs- und Hochachsen p, r, g, und der jeweiligen Winkellage $ang_{i,n}$ des Lasermessstrahls $4_i$ in Richtung auf den Punkt $P_{i,n}$ bezüglich des Fahrzeugs 3 kann dann aus dem jeweiligen Entfernungsmesswert $d_{i,n}$ die Position des Abtastpunkts $P_{i,n}$ im Koordinatensystem 10 berechnet werden. Eine Vielzahl solcherart vermessener und berechneter Abtastpunkte $P_{i,n}$ bildet die Umgebung 2 in Form einer "Abtastpunktwolke" im Koordinatensystem 10 ab.

Fig. 2 zeigt das Laufzeit-Messprinzip der Vorrichtung 1 in einem der drei Sende/Empfangs-Kanäle der Vorrichtung 1, welche jeweils für einen Scanfächer $5_i$ zuständig sind. Dasselbe Prinzip wird für jeden Sende/Empfangs-Kanal, d.h. für jeden Scanfächer $5_i$, der Vorrichtung 1 angewandt.

Gemäß Fig. 2, und im Rahmen der beanspruchten Erfindung, werden die Sende-Laserimpulse $S_{i,n}$ im i-ten Sende/Empfangs-Kanal von einem Lasersender $11_i$ über einen Spiegel 12 und eine Ablenkeinrichtung 13 (hier: ein rotierendes Spiegelprisma) als Sende-Laserstrahl $8_i$ ausgesandt, nach Reflexion am jeweiligen Umgebungspunkt $P_{i,n}$ auf demselben Weg über die Ablenkeinrichtung 13 als umgebungsreflektierte bzw. Empfangs-Laserimpulse $E_{i,n}$ in Form eines Empfangs-Laserstrahls $9_i$ zurückerhalten und treffen auf einem Laserempfänger $14_i$ auf. Die Sendezeitpunkte $t_{S,i,n}$ der Laserimpulse $S_{i,n}$ und die Empfangszeitpunkte $t_{E,i,n}$ der umgebungsreflektierten Laserimpulse $E_{i,n}$ werden einer Messeinrichtung 15 zugeführt, welche daraus anhand der Gleichung (1) die jeweilige Entfernung $d_{i,n}$ berechnet.

Die Impulsrate (pulse repetition rate, PRR) der Sende-Laserimpulse $S_{i,n}$ ist konstant oder kann z.B. zur Auflösung von MTA- (multiple time around) -Mehrdeutigkeiten moduliert werden, um die Zuordnung von Empfangsimpulsen $E_{i,n}$ und Sendeimpulsen $S_{i,n}$ zueinander zu erleichtern, wie in der Technik bekannt.

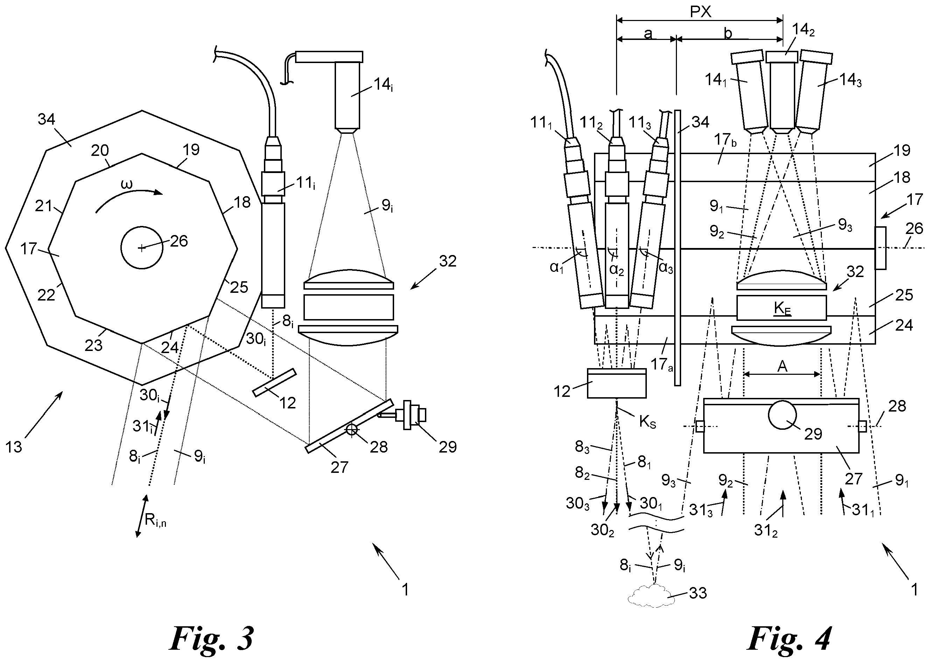

In den Fig. 3 und 4 sind die mechanischen und optischen Komponenten aller drei Sende/Empfangs-Kanäle der Vorrichtung 1 gezeigt. Das Gehäuse 16 (Fig. 2) der Vorrichtung 1, das all diese Komponenten lagert, ist in den Fig. 3 und 4 zwecks Übersichtlichkeit entfernt.

In dem Beispiel der Fig. 3 und 4, und im Rahmen der beanspruchten Erfindung, ist die Strahlablenkeinrichtung 13 für alle Sendeempfangs-Kanäle ein gemeinsames Spiegelprisma 17, dessen Prismenmantelseiten 18 - 25 jeweils eine Spiegelfläche zur Ablenkung der Sende- und EmpfangsLaserstrahlen $8_i$ und $9_i$ bilden und dessen Prismenachse die Drehachse 26 ist, um die sich die Spiegelflächen 18 - 25 drehen. Das Spiegelprisma 17 kann jede beliebige Anzahl von Prismenmantelseiten und damit Spiegelflächen 18 - 25 haben, z.B. drei, vier usw., und ein regelmäßiges oder unregelmäßiges Prisma sein. Die Prismenmantelseiten bzw. Spiegelflächen 18 - 25 können demgemäß alle gleich groß und gleiche Abstände zur Prismenachse 26 haben oder auch nicht.

Das Spiegelprisma 17 dreht sich mit einer Winkelgeschwindigkeit $\omega$. Aufgrund der Laufzeit $\Delta T_{i,n}$ eines als Sende-Laserimpuls $S_{i,n}$, von der Vorrichtung 1 ausgesandten und als Empfangs-Laserimpuls $E_{i,n}$ in der Vorrichtung 1 zurückerhaltenen Laserimpulses bewegt sich die Strahlablenkeinrichtung 13 während der Laufzeit $\Delta T_{i,n}$ mit der Winkelgeschwindigkeit $\omega$ weiter, sodass die entsprechende Spiegelfläche 19 - 25 (hier: 24) beim Empfangen des Empfangs-Laserstrahles $9_i$ nicht mehr dieselbe Lage hat. Um dennoch aus genau der Orientierung $R_{i,n}$ des Sende-Laserstrahles $8_i$ beim Vermessen des Umgebungspunktes $P_{i,n}$ mit dem Sende-Laserimpuls $S_{i,n}$ den entsprechenden Empfangs-Laserimpuls $E_{i,n}$ im Laserempfänger $14_i$ empfangen zu können, verfügt die Strahlablenkeinrichtung 13 zusätzlich über einen Kompensationsspiegel 27, der um eine zur Drehachse 26 parallele Stellachse 28 mittels eines Aktuators 29 verstellbar ist. Der Aktuator 29 kann z.B. von der Winkelgeschwindigkeit $\omega$ und der aktuellen durchschnittlichen Zielentfernung $d_{i,n}$ der letzten vermessenen Punkte $P_{i,n}$ gesteuert werden, um den vorgenannten Effekt zu kompensieren.

Anstelle der Verwendung eines Kompensationsspiegels 27 könnte der genannte, von der Winkelgeschwindigkeit $\omega$ und der aktuellen durchschnittlichen Zielentfernung $d_{i,n}$ abhängige Winkelversatz zwischen Sende-Laserstrahl $8_i$ und Empfangs-Laserstrahl $9_i$ auch durch einen entsprechenden Winkelversatz zwischen dem jeweiligen Lasersender $11_i$ und seinem zugehörigen Laserempfänger $14_i$ erreicht werden, beispielsweise durch eine Schwenklagerung der Lasersender $11_i$ und/oder Laserempfänger $14_i$ um die Drehachse 26, welche Schwenklagerung durch den Aktuator 29 verstellt wird. In einer weiteren Variante könnte ein für die Lasersender $11_i$ verwendeter Längsabschnitt $17_a$ des Spiegelprismas 17 gegenüber einem für die Laserempfänger $14_i$ verwendeten Längsabschnitt $17_b$ des Spiegelprismas 17 winkelverdreht werden, z.B. indem die Längsabschnitte $17_a$, $17_b$ auf einer gemeinsamen Welle um die Drehachse 26 gegeneinander winkelverdrehbar gelagert sind, um den genannten Winkelversatz zwischen Sende- und Empfangs-Laserstrahlen $8_i$, $9_i$ zu kompensieren. Der Winkelversatz zwischen den beiden Längsabschnitten $17_a$, $17_b$ des Spiegelprismas 17 wird dazu wieder vom Aktuator 29 abhängig von der Winkelgeschwindigkeit $\omega$ des Spiegelprismas 17 und der aktuellen durchschnittlichen Zielentfernung $d_{i,n}$ eingestellt.

Für jeden Sende/Empfangs-Kanal i, d.h. für jeden Scanfächer $5_i$, umfasst die Vorrichtung 1 jeweils einen Lasersender $11_i$ und einen zugehörigen Laserempfänger $14_i$, im gezeigten Beispiel also die Lasersender- und Laserempfänger-Paare $\{11_1, 14_1\}$, $\{11_2, 14_2\}$ und $\{11_3, 14_3\}$. Die Senderichtung $30_i$ der Vorrichtung 1 für einen Lasersender $11_i$ ist dabei jeweils im Wesentlichen parallel zur Empfangsrichtung $31_i$ der Vorrichtung 1 für den Laserempfänger $14_i$ des für den jeweiligen Scanfächer $5_i$ zuständigen Lasersender- und Laserempfänger-Paares, u.zw jeweils betrachtet zum Sendezeitpunkt $t_{S,i,n}$ (der "Sendezeit") und zugehörigen Empfangszeitpunkt $t_{E,i,n}$ (der "Empfangszeit") der Sende- und Empfangs-Laserimpulse $S_{i,n}$ bzw. $E_{i,n}$ in den Sende- und Empfangs-Laserstrahlen $8_i$ bzw. $9_i$. Der Winkelversatz durch den Kompensationsspiegel 27 bzw. die gegenseitige Verdrehung der Lasersender und Laserempfänger $11_i$, $14_i$ bzw. von entsprechenden Längsabschnitten $17_a$, $17_b$ des Spiegelprismas 17 um die Drehachse 26 kompensiert dabei die Weiterdrehung der Ablenkeinrichtung 13 während der Impulslaufzeit $d_{i,n}$.

Die Senderichtungen $30_i$ aller Lasersender $11_i$ liegen - betrachtet zu den jeweiligen Sende- und Empfangszeiten der Sende- und Empfangslaserstrahlen $8_i$, $9_i$ - jeweils unter einem anderen Winkel $\alpha_i$ zur Drehachse 26 und damit zur jeweils verwendeten der Spiegelflächen 18 - 25, siehe Fig. 4. Dasselbe trifft auf die - damit ja paarweise parallelen - Empfangsrichtungen $31_i$ der Laserempfänger $14_i$ zu.

Der Winkel $\alpha_1 - \alpha_2$ zwischen der Senderichtung $30_1$ des ersten Lasersenders $11_1$ und der Senderichtung $30_2$ des zweiten Lasersenders $11_2$ sowie der Winkel $\alpha_2 - \alpha_3$ zwischen der Senderichtung $30_2$ des zweiten Lasersenders $11_2$ und der Senderichtung $30_3$ des dritten Lasersenders $11_3$ - und damit auch die jeweiligen Winkel zwischen den Empfangsrichtungen $31_1$, $31_2$, $31_3$ - beträgt - wieder betrachtet zu den jeweiligen Sende- und Empfangszeiten der Sende- und Empfangslaserstrahlen $8_i$, $9_i$ - beispielsweise jeweils 1° bis 30°, bevorzugt 5° bis 15°, besonders bevorzugt 5° bis 10° und insbesondere bevorzugt beispielsweise ca. 7°.

Es versteht sich, dass die Lasersender $11_i$ und Laserempfänger $14_i$ anstelle über die Umlenk- und Kompensationsspiegel 12, 27 auch direkt auf die Spiegelflächen 18 - 25 der Ablenkeinrichtung 13 gerichtet werden könnten, oder über mehrere Umlenk- und/oder Kompensationsspiegel.

Die Lasersender $11_i$ und jeweils zugehörigen Laserempfänger $14_i$ sind in Richtung der Drehachse 26 gesehen voneinander beabstandet, d.h. haben eine Parallaxe PX in Richtung der Drehachse 26. Dadurch sind die Laserempfänger $14_i$ unempfindlich, gleichsam "blind", gegenüber Reflexionen der Sende-Laserstrahlen $8_i$ an Umgebungszielen, die in einem Nahbereich N von der Vorrichtung 1 aus liegen, beispielsweise Fahrwerkteilen des Fahrzeugs 3, Wolken usw.

Wie in Fig. 5 gezeigt, hängt die Größe N dieses Nahbereichs, in dem die Vorrichtung 1 unempfindlich für Messziele ist, von der Parallaxe PX, der unvermeidlichen Strahlaufweitung W der gebündelt ausgesandten Sende-Laserstrahlen $8_i$ sowie der Empfangsapertur A der Laserempfänger $14_i$ ab. Die Empfangsapertur A, d.h. der Sichtwinkel der Laserempfänger $11_i$, wird in dem Beispiel der Fig. 3 und 4 durch die Schnittmenge aus Größe der Spiegelflächen 18 - 25, Größe des Kompensationsspiegels 27, Apertur einer im Strahlengang jedes Empfangs-Laserstrahls $9_i$ liegenden Fokussieroptik 32 und der Größe der Lichtdetektionsfläche jedes Laserempfängers $14_i$ bestimmt. Erst ab einem solchen Abstand N eines Umgebungspunktes $P_{i,n}$ von der Vorrichtung 1, in dem dieser innerhalb des durch die Empfangsapertur A bedingten Sichtfelds B des jeweiligen Laserempfängers $14_i$ liegt, ist die Vorrichtung 1 messempfindlich. Umgekehrt werden somit Ziele im Nahbereich N ausgeblendet, beispielsweise störende Wolken 33. In einer beispielhaften Ausführungsform beträgt die Strahlaufweitung des Sende-Laserstrahls $8_i$ 0,1 - 1 mrad, die Empfangsapertur A 1 - 10 mrad und die Parallaxe PX 5 bis 50 cm, bevorzugt 10 cm bis 20 cm.

Um die Nahbereichsunempfindlichkeit der Vorrichtung 1 weiter zu verbessern und die Trennschärfe des Nahbereichs N zu erhöhen, kann das Spiegelprisma 17 optional mit einer über seinen Umfang umlaufenden Rippe 34 ausgestattet sein. Je größer der Durchmesser der Rippe 34 ist, desto besser ist die Trennschärfe des Nahbereichs N; auch kann die Rippe 34 zur vollständigen Blockierung von Streulicht von sehr nahen Zielen, wie Streureflexionen am Gehäuse 16 der Vorrichtung 1 oder an Teilen des Fahrzeugs 3, verwendet werden.

Anstelle der umlaufenden Rippe 34 kann auch eine umlaufende Nut in das Spiegelprisma 17 eingearbeitet werden, um die Trennschärfe zwischen den Sende- und Empfangs-Kanälen der Vorrichtung 1 zu erhöhen. Eine solche Nut kann auch so interpretiert werden, dass das Spiegelprisma 17 aus einer Folge mehrerer axial auf ein und derselben Drehachse 26 hintereinandergeschalteter Einzel-Spiegelprismen zusammengesetzt ist, die gemeinsam um die Drehachse 26 rotieren.

Für eine hohe Empfindlichkeit der Vorrichtung 1 und damit das Vermessen weit entfernter Umgebungen 2 ist eine möglichst große Empfangsapertur A der Laserempfänger $11_i$ wünschenswert, d.h. möglichst große Spiegelflächen 18 - 25, eine möglichst große Fokussieroptik 32 und ein entsprechend großer Kompensationsspiegel 27. Wie aus Fig. 4 ersichtlich liegen dazu die Laserempfänger $14_i$ in Richtung der Drehachse 26 gesehen insbesondere in einem größeren Abstand b zur Nut bzw. Rippe 34 als die Lasersender $11_i$ mit ihrem Abstand a, d.h.

$$b > a,$$

bevorzugt

$$b \gg a.$$

Dadurch ist ein größerer axialer Bereich des Spiegelprismas 17 für die Empfangs-Laserstrahlen $9_i$ reserviert als für die Sende-Laserstrahlen $8_i$. Im Gegensatz dazu sind die Sende-Laserstrahlen $8_i$ der Lasersender $11_i$ stark gebündelt und benötigen nur sehr kleine Auftreffpunkte auf dem Spiegelprisma 17, sodass nur ein kurzer Axialabschnitt des Spiegelprismas 17 für die Sende-Laserstrahlen $8_i$ reserviert zu werden braucht.

Um den für die Sende-Laserstrahlen $8_i$ auf dem Spiegelprisma 17 benötigten Bereich zu minimieren, sind die Lasersender $11_i$ so in Bezug auf das Spiegelprisma 17 angeordnet (sei es mit oder ohne Umlenkspiegel 12), dass sich die Sende-Laserstrahlen $8_i$ im wesentlichen an der Strahlablenkeinrichtung 13, d.h. in deren unmittelbarer Nähe, in einem Kreuzungspunkt $K_s$ kreuzen. Je näher der Kreuzungspunkt $K_s$ den Spiegelflächen 18 - 25 des Spiegelprismas 17 ist, ein umso kürzerer Axialabschnitt des Spiegelprismas 17 in Drehachsenrichtung 26 gesehen ist für die Umlenkung der Sende-Laserstrahlen $8_i$ auf dem Spiegelprisma 17 nötig.

Auch die Laserempfänger $14_i$ sind optional so angeordnet, dass sich die Empfangs-Laserstrahlen $9_i$ kreuzen, und zwar einerseits ebenfalls in der Nähe der Strahlablenkeinrichtung 13, um die dafür erforderliche axiale Länge des Spiegelprismas 17 zu minimieren, und andererseits um in deren Kreuzungsbereich $K_E$ die Fokussieroptik 32 anzuordnen. Dadurch kann die Größe der Fokussieroptik 32 auf den Kreuzungsbereich $K_E$ reduziert und damit minimiert werden.

Wenn alle Spiegelflächen 18 - 25 der Strahlablenkeinrichtung 13 parallel zur Drehachse 26 liegen und die zweiten Sendeund Empfangsrichtungen $30_2$, $31_2$ normal zur Drehachse 26 liegen, dann verläuft der zweite Scanfächer $5_2$ in Nadir-Richtung vom Fahrzeug 3 aus, sofern die Drehachse 26 horizontal liegt. Wenn die Drehachse 26 in der Fortbewegungsrichtung F des Fahrzeugs 3 angeordnet wird, dann liegt in diesem Fall der Scanfächer $5_2$ in einer vertikalen, quer zur Fortbewegungsrichtung F verlaufenden Ebene. Der erste und der dritte Scanfächer $5_1$, $5_3$ sind dann schräg vorwärts bzw. schräg rückwärts dazu geneigt.

Um ein versehentliches Rückstreuen jener Sende-Laserstrahlen $8_i$, die sich von der Strahlablenkeinrichtung 13 weg gesehen den Empfangs-Laserstrahlen $9_i$ nähern (hier: der Sende-Laserstrahl $8_1$ dem Empfangs-Laserstrahl $9_3$), sodass sie also von einem Nahziel 33 versehentlich reflektiert werden könnten, kann die folgende optionale Maßnahme getroffen werden. Die Lasersender und Laserempfänger $11_i$, $14_i$ werden so ausgerichtet, dass die Sende- und Empfangs-Laserstrahlen $8_i$, $9_i$ zwischen der Strahlablenkung 13 und der Umgebung 2, die von der Strahlablenkeinrichtung 13 weg gesehen (hier: nach unten gesehen) sich einander nähern, zueinander windschief sind. Dadurch kann die in Fig. 4, unten, gezeigte Situation eines Rückstreuens eines Sende-Laserimpulses $S_{i,n}$ in den Empfangskanal eines nichtzugehörigen Laserempfängers $14_j$ ($j \neq i$) vermieden werden.

Es versteht sich, dass die Lasersender $11_i$ und deren Senderichtungen $30_i$ (und dementsprechend auch die dazu parallelen Laserempfänger $14_i$ und Empfangsrichtungen $31_i$) dann nicht mehr in einer zur Drehachse 26 parallelen Ebene liegen, sondern davon abweichen. Bereits eine geringfügige Abweichung von der Ebene der Drehachse 26 genügt, um im gewünschten Nahbereich der Vorrichtung 1 einen Normalabstand zwischen den windschiefen Sende- und Empfangs-Laserstrahlen $8_i$, $9_i$ zu erreichen, der etwa der Parallaxe PX entspricht und somit dieselbe Nahbereichsunempfindlichkeit errichtet wie die Parallaxe PX für einander sich nicht nähernde, d.h. parallele ($8_2$, $9_2$) oder divergierende ($8_3$, $9_1$), Sende- und Empfangsstrahlen $8_i$, $9_i$.

Es versteht sich, dass in allen gezeigten Ausführungsformen anstelle rotierender Spiegelflächen 18 - 25 des rotierenden Spiegelprismas 17 auch periodisch schwingende Spiegelflächen 18 - 25 verwendet werden könnten.

EP 4 012 441 B1

**Patentansprüche**

1. Vorrichtung (1) zur Vermessung einer Umgebung (2) durch Laufzeitmessung von daran reflektierten Laserstrahlen ($4_i$), insbesondere gepulsten Laserstrahlen, umfassend:

   eine Strahlablenkeinrichtung (13) mit zumindest einer Spiegelfläche (18 - 25), die um eine zur Spiegelfläche nicht-normale Drehachse (26) dreh- oder schwingbar ist, welche Strahlablenkeinrichtung (13) ein Spiegelprisma (17) aufweist, dessen Prismenmantelseiten jeweils eine Spiegelfläche (18 - 25) bilden und dessen Prismenachse die Drehachse (26) ist,
   einen ersten Lasersender ($11_1$), der zum Aussenden eines ersten Sende-Laserstrahls ($8_1$) über die Strahlablenkeinrichtung (13) in einer ersten zeitabhängigen Senderichtung ($30_1$) ausgebildet ist, und
   einen ersten Laserempfänger ($14_1$), der zum Empfangen des von der Umgebung (2) reflektierten und über die Strahlablenkeinrichtung (13) in einer ersten zeitabhängigen Empfangsrichtung ($31_1$) zurückerhaltenen ersten Sende-Laserstrahls ($8_i$) als ersten Empfangs-Laserstrahl ($9_i$) ausgebildet ist,
   wobei die ersten Sende- und Empfangsrichtungen ($30_1$, $31_1$) zu den jeweiligen Sende- und Empfangszeiten der Sende- und Empfangs-Laserstrahlen ($8_i$, $9_i$) zueinander parallel und in einem ersten Winkel ($\alpha_1$) zur Drehachse (26) liegen, weiterhin umfassend
   einen zweiten Lasersender ($11_2$), der zum Aussenden eines zweiten Sende-Laserstrahls ($8_2$) in einer zweiten zeitabhängigen Senderichtung ($30_2$) über die Strahlablenkeinrichtung (13) ausgebildet ist, und
   einen zweiten Laserempfänger ($14_2$), der zum Empfangen des von der Umgebung (2) reflektierten und über die Strahlablenkeinrichtung (13) in einer zweiten zeitabhängigen Empfangsrichtung ($31_2$) zurückerhaltenen zweiten Sende-Laserstrahls ($8_2$) als zweiten Empfangs-Laserstrahl ($9_2$) ausgebildet ist,
   wobei die zweiten Sende- und Empfangsrichtungen ($30_2$, $31_2$) zu den jeweiligen Sende- und Empfangszeiten der Sende- und Empfangs-Laserstrahlen ($8_i$, $9_i$) zueinander parallel und in einem zweiten Winkel ($\alpha_2$) zur Drehachse (26) liegen, und
   wobei der erste Laserempfänger ($14_1$) vom ersten Lasersender ($11_1$) und der zweite Laserempfänger ($14_2$) vom zweiten Lasersender ($11_2$) jeweils in Richtung der Drehachse (26) beabstandet (PX) ist.

2. Vorrichtung nach Anspruch 1, **dadurch gekennzeichnet, dass** die Sende-Laserstrahlen ($8_i$) einander im wesentlichen an der Strahlablenkeinrichtung (13) kreuzen.

3. Vorrichtung nach Anspruch 1 oder 2, **dadurch gekennzeichnet, dass** die Empfangs-Laserstrahlen ($9_i$) zwischen der Strahlablenkeinrichtung (13) und den Laserempfängern ($14_i$) einander kreuzen.

4. Vorrichtung nach Anspruch 3, **dadurch gekennzeichnet, dass** im Kreuzungsbereich ($K_E$) der Empfangs-Laserstrahlen ($31_i$) eine Fokussieroptik (32) angeordnet ist.

5. Vorrichtung nach einem der Ansprüche 1 bis 4, **dadurch gekennzeichnet, dass** die ersten und zweiten Sende- und Empfangsrichtungen ($30_i$, $31_i$) zu den jeweiligen Sende- und Empfangszeiten der Sende- und Empfangs-Laserstrahlen ($8_i$, $9_i$) in einer gemeinsamen, zur Drehachse (26) parallelen Ebene liegen.

6. Vorrichtung nach einem der Ansprüche 1 bis 4, **dadurch gekennzeichnet, dass** die Lasersender ($11_i$) und Laserempfänger ($14_i$) so ausgerichtet sind, dass zwischen Strahlablenkeinrichtung (13) und Umgebung (2) jene Sende- und EmpfangsLaserstrahlen ($8_i$, $9_j$), die von der Strahlablenkeinrichtung (13) weg gesehen sich einander nähern, zueinander windschief sind.

7. Vorrichtung nach einem der Ansprüche 1 bis 6, **dadurch gekennzeichnet, dass** das Spiegelprisma (17) eine über seinen Umfang umlaufende Nut hat, wobei in Richtung der Prismenachse (26) gesehen die Lasersender ($11_i$) zur einen Seite und die Laserempfänger ($14_i$) zur anderen Seite der Nut liegen.

8. Vorrichtung nach einem der Ansprüche 1 bis 6, **dadurch gekennzeichnet, dass** das Spiegelprisma (17) eine über seinen Umfang umlaufende Rippe (34) trägt, wobei in Richtung der Prismenachse (26) gesehen die Lasersender ($11_i$) zur einen Seite und die Laserempfänger ($14_i$) zur anderen Seite der Rippe (34) liegen.

9. Vorrichtung nach Anspruch 7 oder 8, **dadurch gekennzeichnet, dass** in Richtung der Prismenachse (26) gesehen die Laserempfänger ($14_i$) in einem größeren Abstand (b) zur Nut bzw. Rippe (34) liegen als die Lasersender ($11_i$).

10. Vorrichtung nach einem der Ansprüche 1 bis 9, **gekennzeichnet durch**

einen dritten Lasersender ($11_3$), der zum Aussenden eines dritten Sende-Laserstrahls ($8_3$) über die Strahlablenkeinrichtung (13) in einer dritten zeitabhängigen Senderichtung ($30_3$) ausgebildet ist, und

einen dritten Laserempfänger ($14_3$), der zum Empfangen des von der Umgebung (2) reflektierten und über die Strahlablenkeinrichtung (13) in einer dritten zeitabhängigen Empfangsrichtung ($31_3$) zurückerhaltenen dritten Sende-Laserstrahls ($8_3$) als dritten Empfangs-Laserstrahl ($9_3$) ausgebildet ist,

wobei die dritten Sende- und Empfangsrichtungen ($30_3$, $31_3$) zu den jeweiligen Sende- und Empfangszeiten der Sende- und Empfangs-Laserstrahlen ($8_i$, $9_i$) zueinander parallel und in einem dritten Winkel ($\alpha_3$) zur Drehachse (26) liegen, und

wobei der dritte Laserempfänger ($14_3$) vom dritten Lasersender ($11_3$) in Richtung der Drehachse (26) beabstandet (PX) ist.

11. Vorrichtung nach Anspruch 10, **dadurch gekennzeichnet, dass** die ersten Sende- und Empfangsrichtungen ($30_1$, $31_1$) mit den zweiten Sende- und Empfangsrichtungen ($30_2$, $31_2$) sowie die zweiten Sende- und Empfangsrichtungen ($30_2$, $31_2$) mit den dritten Sende- und Empfangsrichtungen ($30_3$, $31_3$) jeweils zu den jeweiligen Sende- und Empfangszeiten der Sende- und EmpfangsLaserstrahlen ($8_i$, $9_i$) einen Winkel ($\alpha_1 - \alpha_2$, $\alpha_2 - \alpha_3$) im Bereich von 1° bis 30°, bevorzugt 5° bis 15°, besonders bevorzugt 5° bis 10°, bilden.

12. Vorrichtung nach Anspruch 10 oder 11, **dadurch gekennzeichnet, dass** alle Spiegelflächen (18 - 25) parallel zur Drehachse (26) und die zweiten Sende- und Empfangsrichtungen ($30_2$, $31_2$) normal zur Drehachse (26) liegen.

13. Vorrichtung nach einem der Ansprüche 1 bis 12, **dadurch gekennzeichnet, dass** die Strahlablenkeinrichtung (13) im Strahlengang der Empfangs-Laserstrahlen ($9_i$) zu den Laserempfängern ($14_i$) zumindest einen Kompensationsspiegel (27) aufweist, der um eine zur Drehachse (26) parallele Stellachse (28) verstellbar ist.

14. Vorrichtung nach Anspruch 13, **dadurch gekennzeichnet, dass** ein gemeinsamer Kompensationsspiegel (27) für alle Empfangs-Laserstrahlen ($9_i$) vorgesehen ist.

15. Vorrichtung nach einem der Ansprüche 1 bis 14, **dadurch gekennzeichnet, dass** sie auf einem Luftfahrzeug (3), das für eine Hauptflugrichtung (F) ausgebildet ist, mit ihrer Drehachse (26) nicht-normal zur Hauptflugrichtung (F) montiert ist, bevorzugt im wesentlichen parallel zur Hauptflugrichtung (F).


**Claims**

1. Apparatus (1) for measuring an environment (2) by means of time-of-flight measurement of laser beams ($4_i$) reflected thereon, in particular pulsed laser beams, comprising:

a beam deflection device (13) having at least one mirror surface (18 - 25) which can rotate or pivot about an axis of rotation (26) that is non-normal to the mirror surface, which beam deflection device (13) has a mirror prism (17) whose prism shell sides each form one mirror surface (18 - 25) and whose prism axis is the axis of rotation (26),

a first laser transmitter ($11_1$) configured to transmit a first transmission laser beam ($8_1$) via the beam deflection device (13) into a first time-dependent transmission direction ($30_1$), and

a first laser receiver ($14_1$) configured to receive the first transmission laser beam ($8_i$) reflected by the environment (2) and received back via the beam deflection device (13) in a first time-dependent reception direction ($31_1$) as a first reception laser beam (9i),

wherein the first transmission and reception directions ($30_1$, $31_1$) lie parallel to one another and in a first angle ($\alpha_1$) with respect to axis of rotation (26) at the respective transmission and reception times of the transmission and reception laser beams ($8_i$, $9_i$),

further comprising a second laser transmitter ($11_2$) configured to transmit a second transmission laser beam ($8_2$) via the beam deflection device (13) into a second time-dependent transmission direction ($30_2$), and

a second laser receiver ($14_2$) configured to receive the second transmission laser beam ($8_2$) reflected by the environment (2) and received back via the beam deflection device (13) in a second time-dependent reception direction ($31_2$) as a second reception laser beam ($9_2$),

wherein the second transmission and reception directions ($30_2$, $31_2$) lie parallel to one another and in a second angle ($\alpha_2$) with respect to the axis of rotation (26) at the respective transmission and reception times of the transmission and reception laser beams ($8_i$, $9_i$), and

wherein the first laser receiver ($14_1$) is spaced apart (PX) from the first laser transmitter ($11_1$) and the second

laser receiver ($14_2$) is spaced apart from the second laser transmitter ($11_2$), each in direction of the axis of rotation (26).

2. Apparatus according to claim 1, **characterized in that** the transmission laser beams ($8_i$) cross each other substantially at the beam deflection device (13).

3. Apparatus according to claim 1 or 2, **characterized in that** the reception laser beams ($9_i$) cross each other between the beam deflection device (13) and the laser receivers ($14_i$).

4. Apparatus according to claim 3, **characterized in that** a focusing optics (32) is arranged in the crossing area ($K_E$) of the reception laser beams (31i).

5. Apparatus according to any one of claims 1 to 4, **characterized in that** the first and second transmission and reception directions ($30_i$, $31_i$) lie, at the respective transmission and reception times of the transmission and reception laser beams ($8_i$, 9i), in a common plane that is parallel to the axis of rotation (26).

6. Apparatus according to any one of claims 1 to 4, **characterized in that** the laser transmitters ($11_i$) and laser receivers ($16_i$) are oriented in such a way that between the beam deflection device (13) and the environment (2) those transmission and reception laser beams ($8_i$, $9_i$) that approach one another when seen from the beam deflection device (13) are skewed relative to one another.

7. Apparatus according to any one of claims 1 to 6, **characterized in that** the mirror prism (17) has a groove running around its circumference, wherein, seen in direction of the prism axis (26), the laser transmitters ($11_i$) lie on the one side and the laser receivers ($14_i$) lie on the other side of the groove.

8. Apparatus according to any one of claims 1 to 6, **characterized in that** the mirror prism (17) carries a rib (34) running around its circumference, wherein, seen in direction of the prism axis (26), the laser transmitters ($11_i$) lie on the side and the laser receivers ($14_i$) lie on the other side of the rib (34).

9. Apparatus according to claim 7 or 8, **characterized in that**, seen in direction of the prism axis (26), the laser receivers ($14_i$) lie at a greater distance (b) to the groove or rib (34), respectively, than the laser transmitters ($11_i$).

10. Apparatus according to any one of claims 1 to 9, **characterized by**

a third laser transmitter ($11_3$) configured to transmit a third transmission laser beam ($8_3$) via the beam deflection device (13) into a third time-dependent transmission direction ($30_3$), and
a third laser receiver (14s) configured to receive the third transmission laser beam ($8_3$) reflected by the environment (2) and received back via the beam deflection device (13) in a third time-dependent reception direction ($31_3$) as a third reception laser beam (9s),
wherein the third transmission and reception directions ($30_3$, $31_3$) lie parallel to one another and in a third angle ($\alpha_3$) with respect to the axis of rotation (26) at the respective transmission and reception times of the transmission and reception laser beams ($8_i$, $9_i$), and
wherein the third laser receiver ($14_3$) is spaced apart (PX) from the third laser transmitter ($11_3$) in direction of the axis of rotation (26).

11. Apparatus according to claim 10, **characterized in that** the first transmission and reception directions ($30_1$, $31_1$) with the second transmission and reception directions ($30_2$, $31_2$) as well as the second transmission and reception directions ($30_2$, $31_2$) with the third transmission and reception directions ($30_3$, $31_3$) form, at the respective transmission and reception times of the transmission and reception laser beams (8i, 9i), respectively an angle ($\alpha_1 - \alpha_2$, $\alpha_2 - \alpha_3$) in a range from 1° to 30°, preferably 5° to 15°, particularly preferably 5° to 10°.

12. Apparatus according to claim 10 or 11, **characterized in that** all mirror surfaces (18 - 25) lie parallel to the axis of rotation (26) and the second transmission and reception directions ($30_2$, $31_2$) lie normal to the axis of rotation (26) .

13. Apparatus according to any one of claims 1 to 12, **characterized in that** the beam deflection device (13) has at least one compensation mirror (27) in the beam path of the reception laser beams ($9_i$) to the laser receivers ($14_i$), which compensation mirror (27) is adjustable about an axis of adjustment (28) that is parallel to the axis of rotation (26).

**14.** Apparatus according to claim 13, **characterized in that** a common compensation mirror (27) is provided for all reception laser beams (9i).

**15.** Apparatus according to any one of claims 1 to 14, **characterized in that** it is mounted on an aircraft (3) designed for a main flight direction (F) with its axis of rotation (26) being non-normal to the main flight direction (F), preferably substantially parallel to the main flight direction (F).

**Revendications**

**1.** Dispositif (1) de mesure d'un environnement (2) par la mesure de temps de vol de rayons laser ($4_i$) s'y réfléchissant, notamment de rayons laser par impulsions, comprenant :

un dispositif de déviation rayon (13) avec au moins une surface réfléchissante (18 - 25) qui est rotative ou pivotable autour d'un axe de rotation (26) non normal par rapport à la surface réfléchissante, lequel dispositif de déviation rayon (13) présente un prisme réfléchissant (17) dont les faces d'enveloppe prismatiques forment respectivement une des surfaces réfléchissantes (18 - 25) et dont l'axe de prisme est l'axe de rotation (26),
un premier émetteur laser ($11_1$) qui est conçu pour émettre un premier rayon laser d'émission ($8_1$) par le biais du dispositif de déviation rayon (13) dans une première direction d'émission ($30_1$) dépendant du temps, et
un premier récepteur laser ($14_1$) qui est conçu pour la réception du premier rayon laser d'émission ($8_i$) réfléchi par l'environnement (2) et récupéré par le biais du dispositif de déviation rayon (13) dans une première direction de réception ($31_1$) dépendant du temps sous forme d'un premier rayon laser de réception (9i),
dans lequel les premières directions d'émission et de réception ($30_1$, $31_1$), aux instants d'émission et de réception respectifs des rayons laser d'émission et de réception ($8_i$, 9i), se situent parallèles l'une par rapport à l'autre et dans un premier angle ($\alpha_1$) par rapport à l'axe de rotation (26),
comprenant en outre un deuxième émetteur laser ($11_2$) qui est conçu pour émettre un deuxième rayon laser d'émission ($8_2$) par le biais du dispositif de déviation rayon (13) dans une deuxième direction d'émission ($30_2$) dépendant du temps, et
un deuxième récepteur laser ($14_2$) qui est conçu pour la réception du deuxième rayon laser d'émission ($8_2$) réfléchi par l'environnement (2) et récupéré par le biais du dispositif de déviation rayon (13) dans une deuxième direction de réception ($31_2$) dépendant du temps sous forme d'un deuxième rayon laser de réception ($9_2$),
dans lequel les deuxièmes directions d'émission et de réception ($30_2$, $31_2$), aux instants d'émission et de réception respectifs des rayons laser d'émission et de réception ($8_i$, $9_i$), se situent parallèles l'une par rapport à l'autre et dans un deuxième angle ($\alpha_2$) par rapport à l'axe de rotation (26), et
dans lequel le premier récepteur laser ($14_1$) est à une distance (PX) du premier émetteur laser ($11_1$) et le deuxième récepteur laser ($14_2$) est à une distance (PX) du deuxième émetteur laser ($11_2$) respectivement en direction de l'axe de rotation (26).

**2.** Dispositif selon la revendication 1, **caractérisé en ce que** les rayons laser d'émission ($8_i$) se croisent les uns les autres essentiellement au niveau du dispositif de déviation rayon (13).

**3.** Dispositif selon la revendication 1 ou 2, **caractérisé en ce que** les rayons laser de réception ($9_i$) se croisent les uns les autres entre le dispositif de déviation rayon (13) et les récepteurs laser (14i).

**4.** Dispositif selon la revendication 3, **caractérisé en ce qu'**une optique de focalisation (32) est disposée dans la zone d'intersection ($K_E$) des rayons laser de réception ($31_i$).

**5.** Dispositif selon l'une des revendications 1 à 4, **caractérisé en ce que** les premiers et deuxièmes dispositifs d'émission et de réception ($30_i$, $31_i$) se situent dans un plan commun parallèle à l'axe de rotation (26) aux instants d'émission et de réception respectifs des rayons laser d'émission et de réception ($8_i$, $9_i$).

**6.** Dispositif selon l'une des revendications 1 à 4, **caractérisé en ce que** les émetteurs laser ($11_i$) et les récepteurs lasers ($14_i$) sont orientés de telle manière qu'entre le dispositif de déviation de rayon (13) et l'environnement (2) ces rayons laser d'émission et de réception ($8_i$, $9_i$) qui se rapprochent les uns des autres, vu dans la direction du dispositif de déviation de rayon (13), sont gauches les uns par rapport aux autres.

**7.** Dispositif selon l'une des revendications 1 à 6, **caractérisé en ce que** le prisme réfléchissant (17) possède une rainure périphérique sur son périmètre, où, vu en direction de l'axe de prisme (26), les émetteurs laser ($11_i$) se

situent de l'un côté et les récepteurs laser (14$_i$) se situent de l'autre côté de la rainure.

8. Dispositif selon l'une des revendications 1 à 6, **caractérisé en ce que** le prisme réfléchissant (17) porte une nervure (34) périphérique sur son périmètre, où, vu en direction de l'axe de prisme (26), les émetteurs laser (11$_i$) se situent de l'un côté et les récepteurs laser (14$_i$) se situent de l'autre côté de la nervure (34).

9. Dispositif selon la revendication 7 ou 8, **caractérisé en ce que**, vu dans la direction de l'axe de prisme (26), les récepteurs laser (14$_i$) se situent à une distance (b) plus grande par rapport à la rainure ou par rapport à la nervure (34), respectivement, que les émetteurs laser (11i).

10. Dispositif selon l'une des revendications 1 à 9, **caractérisé par**

   un troisième émetteur laser (11$_3$) qui est conçu pour émettre un troisième rayon laser d'émission (8$_3$) par le biais du dispositif de déviation rayon (13) dans une troisième direction d'émission (30$_3$) dépendant du temps, et
   un troisième récepteur laser (14$_3$) qui est conçu pour la réception d'un troisième rayon laser d'émission (8$_3$) réfléchi par l'environnement (2) et récupéré par le biais du dispositif de déviation rayon (13) dans une troisième direction de réception (31$_3$) dépendant du temps sous forme d'un troisième rayon laser de réception (9s),
   dans lequel les troisièmes directions d'émission et de réception (30$_3$, 31$_3$), aux instants d'émission et de réception respectifs des rayons laser d'émission et de réception (8$_i$, 9$_i$), se situent parallèles l'une par rapport à l'autre et dans un troisième angle ($\alpha_3$) par rapport à l'axe de rotation (26), et
   dans lequel le troisième récepteur laser (14$_3$) est à une distance (PX) du troisième émetteur laser (11$_3$) en direction de l'axe de rotation (26).

11. Dispositif selon la revendication 10, **caractérisé en ce que** les premiers dispositifs d'émission et de réception (30$_1$, 31$_i$) avec les deuxièmes dispositifs d'émission et de réceptions (30$_2$, 31$_2$), ainsi que les deuxièmes dispositifs d'émission et de réception (30$_2$, 31$_2$) avec les troisièmes dispositifs d'émission et de réception (30$_3$, 31$_3$), respectivement, aux instants d'émission et de réception respectifs des rayons laser d'émission et de réception (8$_1$, 9i), forment un angle ($\alpha_1 - \alpha_2$, $\alpha_2 - \alpha_3$) dans la plage de 1 ° à 30 °, de préférence de 5 ° à 15 °, de manière particulièrement préférée, de 5 ° à 10 °.

12. Dispositif selon la revendication 10 ou 11, **caractérisé en ce que** toutes les surfaces réfléchissantes (18 - 25) se situent parallèlement par rapport à l'axe de rotation(26) et les deuxièmes directions d'émission et de réception (30$_2$, 31$_2$) se situent normalement par rapport à l'axe de rotation (26).

13. Dispositif selon l'une des revendications 1 à 12, **caractérisé en ce que** le dispositif de déviation de rayon (13), dans le trajet des rayons laser de réception (9$_i$) aux récepteurs laser (14$_i$), présente au moins un miroir de compensation (27) qui peut être réglé autour d'un axe de réglage (28) parallèle à l'axe de rotation (26).

14. Dispositif selon la revendication 13, **caractérisé en ce qu'**un miroir de compensation (27) commun est prévu pour tous les rayons laser de réception (9i).

15. Dispositif selon l'une des revendications 1 à 14, **caractérisé en ce qu'**il est monté sur un aéronef (3) qui est conçu pour une direction de vol principale (F), avec son axe de rotation (26) non normal par rapport à la direction de vol principale (F), de préférence, essentiellement parallèle par rapport à la direction de vol principale (F).

**Fig. 1**

**Fig. 5**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3182159 B1
- AT 509180 B1
- US 20200225328 A1
- EP 3425332 A1